Europäisches Patentamt

European Patent Office

Office européen des brevets

(19)

(11) Veröffentlichungsnummer: **0 090 999**
**B1**

(12) # EUROPÄISCHE PATENTSCHRIFT

(45) Veröffentlichungstag der Patentschrift:
21.06.89

(51) Int. Cl.⁴: **G 02 B 6/28**

(21) Anmeldenummer: 83102794.1

(22) Anmeldetag: 21.03.83

(54) Verfahren zur Herstellung eines eine Anordnung von Lichtwellenleitern aufweisenden Körpers.

(30) Priorität: 05.04.82 DE 3212619

(43) Veröffentlichungstag der Anmeldung:
12.10.83 Patentblatt 83/41

(45) Bekanntmachung des Hinweises auf die Patenterteilung:
21.06.89 Patentblatt 89/25

(84) Benannte Vertragsstaaten:
DE FR GB NL

(56) Entgegenhaltungen:
EP-A-0 012 188
GB-A-2 049 987

(73) Patentinhaber: Siemens Aktiengesellschaft Berlin und München, Wittelsbacherplatz 2, D-8000 München 2 (DE)

(72) Erfinder: Winzer, Gerhard, Dr., Zugspitzstrasse 10, D-8011 Putzbrunn (DE)
Erfinder: v. Tomkewitsch, Romuald, Dipl.- Phys., Winklweg 8, D-8026 Ebenhausen (DE)

EP 0 090 999 B1

## Beschreibung

Die Erfindung betrifft ein Verteilerelement zum Verteilen von Licht aus mindestens einem zuführenden Lichtwellenleiter auf weiterführende Lichtwellenleiter nach dem Strahlteilerprinzip gemäß dem Oberbegriff des Patentanspruchs 1.

Ein Verteilerelement der genannten Art nach dem Strahlteilerprinzip und ein Verfahren zu seiner Herstellung ist beispielsweise aus der GB-A-2 049 987 oder der EP-A-0 012 188 bekannt. Bei diesem Verfahren werden die zwei oder mehreren Teile zu dem Verteilerelement zusammengesetzt. Ein wesentliches Problem bei dieser Herstellung ist der Zeitaufwand, der bei der erforderlichen Justierung der zusammenzusetzenden Teile gegeneinander und der Justierung von Steckern auf einzelne Lichtwellenleiter verlorengeht.

Es ist daher die Aufgabe der Erfindung, ein Verteilerelement der eingangs genannten Art anzugeben, bei welchem der Zeitverlust durch Justierung der zusammenzusetzenden Teile relativ zueinander und von weiteren Elementen auf die Lichtwellenleiter des Elements weitgehend vermieden und dadurch die Herstellung erheblich beschleunigt und verbilligt werden kann.

Diese Aufgabe wird durch die im kennzeichnenden Teil des Patentanspruchs 1 angegebenen Merkmale gelöst.

Im einzelnen wirken die angegebenen Lösungsmerkmale dahingehend, daß die Justiererhöhungen und -vertiefungen die Justierung zweier zu verbindender Teil zu einer Selbstjustierung macht und die zylindrischen Formzapfen eine Selbstjustierung von auf Lichtwellenleiter einzujustierenden Teilen ebenfalls in einer selbstjustierenden Weise ermöglichen.

Zweckmäßig kann es unter Umständen sein, wenn gemäß Anspruch 2 von den einander zuzukehrenden Seitenflächen zweier zusammenzusetzender Teile, zwischen denen ein oder mehrere Lichtwellenleiter anzuordnen sind, nur eine dieser Seitenflächen Führungsnuten für die Lichtwellenleiter aufweist. Dadurch können zum einen Führungsnuten gespart werden, zum anderen tritt das Problem der Deckungsgleichheit von Führungsnuten nicht auf.

Zweckmäßig kann es auch sein, wenn nach Anspruch 3 von einander zuzukehrenden Seitenflächen wenigstens zweier zusammenzusetzender Teile eine der Seitenflächen nur Justiererhöhungen aufweist, während die andere Seitenfläche nur entsprechende Justiervertiefungen aufweist. Dadurch können gegebenenfalls Poliervorgänge, die oftmals erforderlich sein werden, auf einer Seitenflächen leichter vorgenommen werden.

Vorzugsweise werden Teile verwendet, deren Justiererhöhungen und -vertiefungen so ausgebildet oder angeordnet sind, wie es im Anspruch 4 bzw. 5 angegeben ist.

Zweckmäßig ist es, gemäß Anspruch 6, wenn zumindest zwei zusammenzusetzende Teile verwendet sind, bei denen die anderen Seitenflächen, die eine Außenfläche des zusammengesetzten Körpers definieren, an denen Formzapfenhälften ausgebildet sind, und die unter einem Winkel an die einander zuzukehrenden Seitenflächen dieser beiden Teile angrenzen, senkrecht zu einer Führungsnut für Lichtwellenleiter angeordnet sind. Dadurch verläuft auch die definierte Außenfläche des zusammengesetzten Körpers senkrecht zu dem Lichtwellenleiter in der betreffenden Führungsnut und dem Formzapfen, wodurch das Anbringen von beispielsweise Steckerelementen an dem Körper erleichtert wird.

Vorteilhaft ist es auch, wenn gemäß Anspruch 7 zumindest zwei zusammenzusetzende Teile verwendet sind, bei denen die Formzapfenhälften jeweils eine plane Seitenfläche aufweisen, die mit der angrenzenden der einander zuzukehrenden Seitenflächen dieser beiden Teile in einer Ebene liegt. Auf dieser Ebene erstreckt sich gegebenenfalls gemäß Anspruch 8 eine auf dieser einen der beiden einander zugekehrten Seitenflächen ausgebildete Führungsnut bis zum freien Ende der Formzapfenhälfte. Der in eine solche Führungsnut eingelegte Lichtwellenleiter ist dann von selbst koaxial zu dem auf diesen beiden Hälften beim Zusammensetzen der beiden Teile entstandenen Zapfen justiert.

Bevorzugterweise weist gemäß Anspruch 9 eine Formzapfenhälfte einen annähernd halbkreisförmigen Querschnitt auf. Dadurch entstehen besonders zweckmäßige Zapfen mit kreiszylindrischem Querschnitt.

Besonders zweckmäßig ist es, wenn gemäß Anspruch 10 die zusammenzusetzenden Teile präzisionsgefertigte einstückige Teile sind. Bei den zusammenzusetzenden Teilen können gemäß Anspruch 11, abgesehen von den Führungsnuten, die Justiererhöhungen und -vertiefungen sowie Formzapfenhälften prismatische Körper sein, die achsparallel zusammensetzbar sind.

Besonders vorteilhaft ist es, wenn nach Anspruch 12 die Teile mit ihren Führungsnuten, Justiererhöhungen und -vertiefungen sowie Formzapfenhälften mittels eines Präzisionsheißpreßverfahrens hergestellte Teile sind.

Ein Element gemäß Anspruch 10 ist insbesondere in Verbindung mit den Merkmalen des Anspruchs 11 hervorragend zur Herstellung eines eine oder mehrere Lichtwellenleiterverzweigungen aufweisenden Körpers für Lichtwellenleiter nach dem Strahlteilerprinzip geeignet, wobei es besonders zweckmäßig ist, dieses Element so auszubilden, wie es im Anspruch 13 angegeben ist. Eine Ausführungsform des Elements nach Anspruch 13 geht aus dem Anspruch 14 hervor.

Ein bevorzugtes Verfahren zur Herstellung eines Elements nach Anspruch 13 ist im Anspruch 15 angegeben. Der nach diesem Verfahren hergestellte Körper enthält wie der bei dem Verfahren gemäß der DE-OS-2 920 951 entstehende Körper eine Vielzahl von einzelnen Lichtwellenleiterverzweigern, die in parallelen Ebenen angeordnet sind. Einzelne Verzweiger können demnach wie bei dem Körper gemäß der GB-A-2 049 987 durch Abtrennen erhalten werden.

Es sei ausdrücklich darauf hingewiesen, daß das erfindungsgemäße Element keinesfalls auf die aus der GB-A-2 049 987 oder der EP-A-0 012 188 bekannten Lichtwellenleiterverzweiger nach dem Strahlteilerprinzip beschränkt ist, sondern daß damit Körper mit den verschiedensten Lichtwellenleiteranordnungen hergestellt werden können, insbesondere Verzweiger nach dem Prinzip des Faserachsenversatzes, Kernanschliffverzweiger, Sternkoppler und dergl. hergestellt werden können.

Die Erfindung wird am Beispiel der Herstellung von Lichtwellenleiterverzweigern nach dem Strahlteilerprinzip anhand der Figuren näher erläutert. Von den Figuren zeigen:

Figur 1  in einer Frontansicht die drei prismatischen, präzisionsgefertigten, einstückigen Teile, aus denen der Körper mit den Lichtwellenleiterverzweigern hergestellt wird, bereits in einer Anordnung, die andeutet, wie diese Teile zusammengesetzt werden und wie die Lichtwellenleiter anzuordnen sind,

Figur 2  eine Draufsicht auf den untersten Teil in Figur 1,

Figur 3  eine Seitenansicht des untersten Teils in Figur 1, und

Figur 4  eine Frontansicht des zusammengesetzten Körpers mit den Lichtwellenleiterverzweigungen, und

Figur 5  eine der Figur 4 entsprechende Frontansicht des fertigen Lichtwellenleiterverzweigers mit in Form eines Einzelverzweigers in einem teilweise gezeigten Gehäuse.

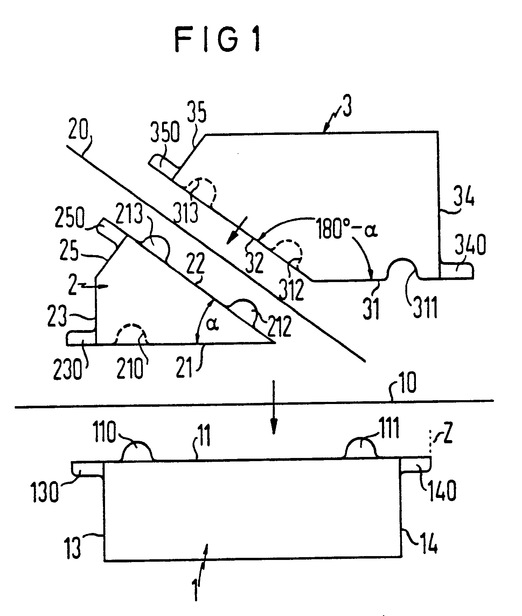

Gemäß Figur 1 bestehen die achsparallel zusammenzusetzenden prismatischen Teile aus einem quaderförmigen Basisteil 1, einem keilförmigen Teil 2 und einem Ergänzungsteil 3. Das Basisteil 1 weist eine obere Seitenfläche 11 auf, auf der nahe bei den vier Ecken Justiererhöhungen 110 und 111 in Form von Noppen ausgebildet sind. Auf dieser oberen Seitenfläche 11, die wie die nicht dargestellte Längsachse des Basisteils 1 senkrecht zur Zeichenebene verläuft, sind äquidistante Führungsnuten ausgebildet, die senkrecht zur Längsachse des Basisteils 1 und damit parallel zur Zeichenebene verlaufen.

Aus den Seitenflächen 13 und 14 des Basisteils, die ebenfalls parallel zu dessen Längsachse verlaufen und im rechten Winkel an die obere Seitenfläche 11 angrenzen, stehen je Nut Formzapfenhälften 130 und 140 hervor, die einen halbkreisförmigen Querschnitt aufweisen. Die plane Seitenfläche eines jeden Formzapfens liegt in einer Ebene mit der oberen planen Seitenfläche 11 des Basisteils und die ihm zugeordnete Nut auf der Seitenfläche 11 erstreckt sich koaxial bis zum Ende der betreffenden Zapfenhälfte.

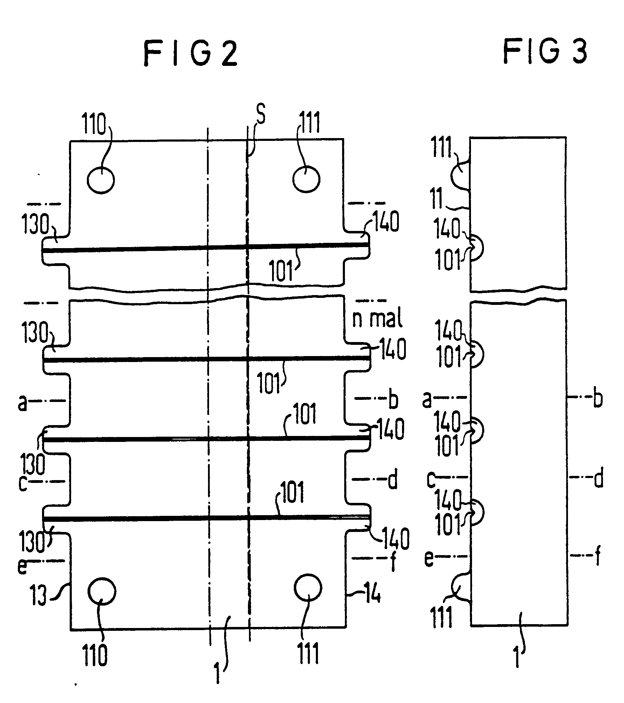

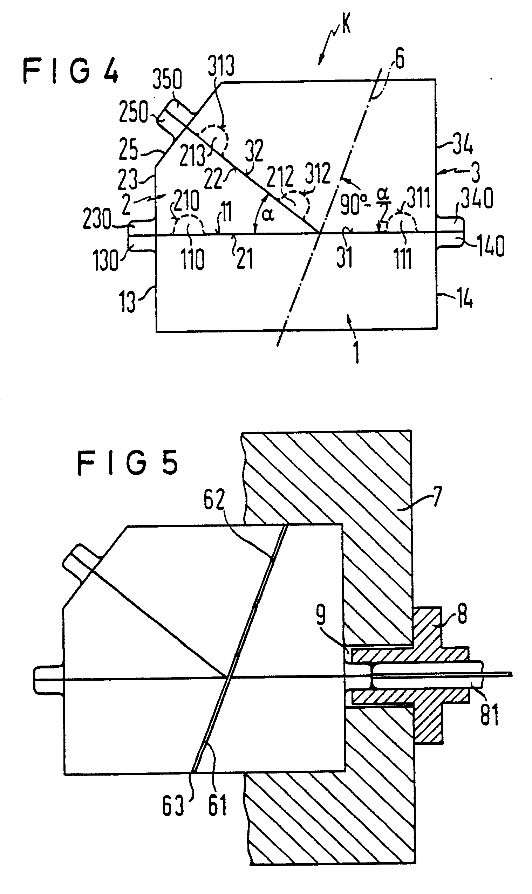

Das soeben beschriebene geht aus der in Figur 2 gezeigten Draufsicht auf die obere Seitenfläche 11 und in der Seitenansicht auf die Seitenfläche 14 des Basisteils 1 in Figur 3 hervor. Die in diesen Figuren sichtbaren Führungsnuten sind mit 101 bezeichnet und aus Figur 2 geht auch hervor, daß die runden Justiernoppen 110 und 111 einen kreisförmigen Grudriß aufweisen.

Bei der späteren Herstellung von Einzelverzweigern werden Durchtrennungen zwischen benachbarten Führungsnuten längs der dazu parallelen Schnittlinien a - b, c - d, e - f durchgeführt.

Die von dem Basisteil abgewandte Seitenfläche 22, die mit der der oberen Seitenfläche 11 des Basisteils 1 zugewandten Seitenfläche 21 einen Keilwinkel α einschließt und die Keilspitze definiert, weist die gleiche Beschaffenheit auf, wie diese obere Seitenfläche 11 des Basisteils 1. Ihr Aussehen entspricht in der Draufsicht im wesentlichen dem links von der gestrichelten Linie S liegenden Teil der Figur 2, wobei die Zapfenhälften 130 den Zapfenhälften 250 und die Justiernoppen 110 den Justiernoppen 213 entsprechen. Die Justiernoppen 212 sind in der Figur 2 allerdings nicht eingezeichnet. Die gestrichelte Linie S entspricht dem Verlauf der Keilspitze des keilförmigen Teils 2.

Die der oberen Seitenfläche 11 des Basisteils 1 zugewandte Seitenfläche 21 des keilförmigen Teils 2 entspricht in Draufsicht ebenfalls der links von der gestrichelten Linie S liegenden Teil der Figur 2, wenn man sich die Führungsnuten 101 wegdenkt und anstelle der Justiernoppen 110 die Justiervertiefungen 210 setzt.

Die Rückenfläche des keilförmigen Teils 2 ist aus zwei im Winkel aneinandergrenzenden planen Seitenflächen 23 und 25 gebildet, aus denen die Formzapfenhälften 230 bzw. 250 hervorstehen und die im rechten Winkel an die Seitenfläche 21 bzw. die Seitenfläche 22 angrenzen.

Das Ergänzungsteil 3 weist zwei aneinandergrenzende, den Winkel 180° abzüglich des Keilwinkels α einschließende Seitenflächen 31 und 32 auf, die wie die Seitenflächen des keilförmigen Teils 2 parallel zur Längsachse des Basisteils 1 verlaufen. Wie die Seitenfläche 21 des keilförmigen Teils 2 weisen auch diese beiden Flächen 31 und 32 Justiervertiefungen 211 bzw. 312 und 313 und keine Führungsnuten für Lichtwellenleiter auf. Sie sind wie die Seitenfläche 21 plan und glatt. Die Seitenfläche 31 schließt mit einer senkrecht daran angrenzenden achsparallelen Seitenfläche 34 ab, aus der Formzapfenhälften 340 hervorstehen, während die Seitenfläche 32 mit einer senkrecht angrenzenden, achsparallelen Seitenfläche 35 abschließt, aus welcher Formzapfenhälften 350 hervorstehen.

Sämtliche Formzapfenhälften 230, 250, 340, 350 entsprechen nach Form und Größe genau den Formzapfenhälften 130 und 140. Die plane Seitenfläche eines jeden der Formzapfenhälften 230, 250, 340, 350 liegt mit der zugeordneten Seitenfläche 21, 22, 31 bzw. 32 in einer Ebene. Allerdings weisen nur die Formzapfenhälften 250 des keilförmigen Teils 2 Führungsnuten wie die Formzapfenhälften 130 und 140 auf.

Jeder der drei Teile 1, 2 und 3 ist einstückig und durch Präzisionsheißpressen in Glas gefertigt. Mit diesem Verfahren können diese Teile samt ihren Führungsnuten, Formzapfen und Justiererhöhungen und -vertiefungen in einem Stück und mit der notwendigen hohen Präzision hergestellt werden.

Aus den drei Teilen 1, 2 und 3 wird der in der Figur 4 dargestellte Körper K wie folgt hergestellt:

In die Führungsnuten auf der Seitenfläche 22 und den Formzapfenhälften 250 werden die Lichwellenleiter 20 in Form von Glasfasern eingelegt. Dann wird der Ergänzungskörper 3 mit der Seitenfläche 32 auf die Seitenfläche 22 des keilförmigen Teils aufgesetzt und die beiden Teile miteinander verkittet. Die Formzapfenhälften 250 und 350 haben sich dabei zu kreiszylindrischen Formzapfen ergänzt, in denen die Lichtwellenleiter 20 koaxial angeordnet sind.

Die beiden Teile 2 und 3 sind so bemessen, daß nach dem Zusammensetzen die Seitenflächen 21 und 31 in einer Ebene liegen und dadurch eine gemeinsame plane Grundflächen der beiden zusammengesetzten Teile bilden. Diese Grundfläche wird überpoliert, so daß danach die Fasern 20 in dieser Grundfläche enden.

In die Führungsnuten auf der oberen Seitenfläche 11 und den Zapfen 130 und 140 des Basisteils 1 werden Glasfasern 10 eingelegt und das aus den Teilen 2 und 3 zusammengesetzte Teil mit der Grundfläche auf die obere Seitenfläche 11 aufgesetzt und mit dem Basisteil 1 verkittet. Beim Zusammensetzen der Teile 2 und 3 erfolgte die Justierung durch die Justiernoppen 212 und 213 und die entsprechenden Justiervertiefungen 312 bzw. 313 von selbst. Analog erfolgt beim Zusammensetzen der beiden zusammengesetzten Teile 2 und 3 mit dem Basisteil 1 durch die Justiernoppen 110 und 111 und die entsprechenden Justiervertiefungen 210 und 311 von selbst.

Nach dem Verbinden des Basisteils 1 mit den Teilen 2 und 3 haben sich die Formzapfenhälften 230 und 130 bzw. 340 und 140 ebenfalls zu kreiszylindrischen Formzapfen ergänzt, in denen die Fasern 10 koaxial angeordnet sind. Es ist auf diese Weise der in Figur 4 dargestellte Körper K entstanden.

Zur Herstellung von Lichtwellenleiterverzweigern nach dem Strahlteilerprinzip wird der Körper K längs der in Figur 4 eingezeichneten Schnittlinie achsparallel durchtrennt. Die Schnittlinie 6 tangiert die Spitze des keilförmigen Teils 2 und ist im Winkel von 90° abzüglich des halben Keilwinkels α zur oberen Seitenfläche 11 des Basisteils 1 geneigt. Der Schnitt sollte dabei so geführt werden, daß die in der Grundfläche 21 mit 31 liegenden Stirnflächen der Fasern 20 nicht verletzt werden.

Die nach dem Durchtrennen entstandenen Trennflächen 61 und 62 auf den getrennten Teilen werden poliert und auf zumindest eine dieser Trennflächen eine teildurchlässige Spiegelschicht 63 aufgebracht. Dann werden die getrennten Teile wieder so zusammengesetzt und verkittet, daß die Trennflächen 61 und 62 sich gegenüberliegen und der oder die mitdurchtrennten Lichtwellenleiter 10 wieder fluchten. Aus dem dadurch entstehenden Körper können durch die im Zusammenhang mit den Figuren 2 und 3 erwähnten Durchtrennungen längs der Linien a - b, c - d, e - f usw. Einzelverzweiger hergestellt werden. Ein solcher Einzelverzweiger weist in Frontansicht das in Fig. 5 dargestellte Aussehen auf. Es ist zweckmäßig, vor diesen Durchtrennungen den Körper an den Stirnflächen der Formzapfenreihen überzupolieren.

Der Einzelverzweiger, wie er beispielsweise in der Fig. 5 dargestellt ist, kann in ein Gehäuse 7 eingebaut werden. Jeder seiner kreiszylindrischen Formzapfen paßt exakt in einen Flansch 8 und kann im Bereich 9 mit diesem Flansch verkittet werden. Damit ist der Flansch 8 zur Aufnahme eines Steckers 81 automatisch justiert.

Gegenüber dem eingangs erwähnten bekannten Verfahren weist das hier beschriebene Verfahren zwei wesentliche Vorteile auf. Erstens wird die Anzahl der zum Aufbau der Elemente notwendigen Klebeflächen von bisher 5 auf 3 verringert. Diese Maßnahme vereinfacht nicht nur die Herstellung, sondern verbessert auch die mechanischen Eigenschaften und das Temperaturverhalten der Elemente. Zweitens kann künftig die nachträgliche Justierung der Lichtwellenleiterflansche entfallen. Dieser Vorteil wird insbesondere dadurch erreicht, daß die Formzapfen hervorstehen. Auch die einen Formschluß bewirkenden Justiervorsprünge und -vertiefungen tragen zur Festigkeit erheblich bei.

Die durch Präzisionsheißpressen in Glas hergestellten Teile weisen ähnliche Poliereigenschaften auf, wie die einzulegenden Glasfasern, so daß beim Überpolieren von Flächen, die Fasern enthalten, keine Probleme durch unterschiedlichen Polierabtrag entstehen können. Anstelle des optischen Kittes oder Klebers kann vorteilhaft auch ein Glaslot zum Verbinden der Teile verwendet werden.

**Patentansprüche**

1. Verteilerelement zum Verteilen von Licht aus mindestens einem zuführenden Lichtwellenleiter auf weiterführende Lichtwellenleiter das aus zwei oder mehreren Teilen (1, 2, 3) besteht, wobei benachbarte Teile mit einander zugekehrten Seitenflächen flächig aneinandergrenzen und wobei auf mindestens einer Seitenfläche ein oder mehrere Führungsnuten zur Aufnahme von Lichtwellenleitern (10, 20) ausgebildet sind, dadurch gekennzeichnet, daß die einander zugekehrten Seitenflächen (11, 21; 11, 31; 22, 32) jeweils zweier zusammenzusetzender Teile (1, 2; 1, 3; 2, 3) ineinanderpassende Justiererhöhungen und -vertiefungen (110, 210; 111, 311; 312 bzw. 313) aufweisen, die eine Selbstjustierung der beiden zusammenzusetzenden Teile ermöglichen, und daß an den anderen Seitenflächen (13, 23; 14, 34; 25, 35) zweier zusammenzusetzender Teile (1, 2; 1, 3; 2, 3), die gemeinsam eine Außenfläche des zusammengesetzten Körpers (K) definieren, je Führungsnut zwei Formzapfenhälften (130, 230; 140, 340; 250, 350) ausgebildet sind, die nach dem Zusammensetzen der beiden Teile einen zylindrischen Formzapfen bilden, in dem der in die zugeordnete Führungsnut (101) eingebrachte Lichtwellenleiter (10, 20) koaxial angeordnet ist.

2. Element nach Anspruch 1, dadurch gekennzeichnet, daß von den einander zuzukehrenden Seitenflächen (11, 21; 11, 31; 22, 32) zweier zusammenzusetzender Teile (1, 2; 1, 3; 2, 3), zwischen denen ein oder mehrere Lichtwellenleiter (10, 20) anzuordnen sind, nur eine dieser Seitenflächen Führungsnuten (101) für die Lichtwellenleiter aufweist.

3. Element nach Anspruch 1 oder 2, dadurch gekennzeichnet, daß von einander zuzukehrenden Seitenflächen (11, 21; 11, 31; 22, 32) wenigstens zweier zusammenzusetzender Teile (1, 2; 1, 3; 2, 3) eine der Seitenflächen (11, 22) nur Justiererhöhungen (110, 111; 212, 213) aufweist, während die andere Seitenfläche (21, 31; 32) nur entsprechende Justiervertiefungen (210, 311; 312 bzw. 313) aufweist.

4. Element nach einem der vorhergehenden Ansprüche, dadurch gekennzeichnet, daß Teile (1, 2, 3) verwendet sind, deren Justiererhöhungen und Vertiefungen (110, 111; 212, 213 bzw. 210, 311, 312, 313) rund ausgebildet sind.

5. Element nach einem der vorhergehenden Ansprüche, dadurch gekennzeichnet, daß Teile (1, 2, 3) verwendet sind, deren Justiererhöhungen und -vertiefungen (110, 111, 212, 213; 210, 311, 312, 313) nahe bei Kanten oder Ecken der Teile ausgebildet sind.

6. Element nach einem der vorhergehenden Ansprüche, dadurch gekennzeichnet, daß zumindest zwei zusammenzusetzende Teile (1, 2; 1, 3; 2, 3) verwendet sind, bei denen die anderen Seitenflächen (13, 23; 14, 34; 25, 35), die eine Außenfläche des zusammengesetzten Körpers (K) definieren, an denen Formzapfenhälften (130, 230; 140, 340; 250, 350) ausgebildet sind und die unter einem Winkel an die einander zuzukehrenden Seitenflächen (11, 21; 11, 31; 22, 32) dieser beiden Teile angrenzen, senkrecht zu einer Führungsnut (101) für Lichtwellenleiter angeordnet sind.

7. Element nach einem der vorhergehenden Ansprüche, dadurch gekennzeichnet, daß zumindest zwei zusammenzusetzende Teile (1, 2; 1, 3; 2, 3) verwendet sind, bei denen die Formzapfenhälften (130, 230; 140, 240; 250, 350) jeweils eine plane Seitenfläche aufweisen, die mit der angrenzenden der einander zuzukehrenden Seitenflächen (11, 21; 11, 31; 22, 32) dieser beiden Teile in einer Ebene liegt.

8. Element nach Anspruch 7, dadurch gekennzeichnet, daß sich auf der planen Seitenfläche eine auf der angrenzenden (11, 22) der einander zuzukehrenden Seitenflächen (11, 21; 11, 31; 22, 32) ausgebildete Führungsnut (101) bis zum freien Ende der Formzapfenhälfte (130, 250) erstreckt.

9. Element nach Anspruch 7 oder 8, dadurch gekennzeichnet, daß eine Formzapfenhälfte (130, 140; 230, 250, 340, 350) einen annähernd halbkreisförmigen Querschnitt aufweist.

10. Element nach einem der vorhergehenden Ansprüche, dadurch gekennzeichnet, daß die zusammenzusetzenden Teile (1, 2, 3) präzisionsgefertigte einstücke Teile sind.

11. Element nach Anspruch 10, dadurch gekennzeichnet, daß bei den zusammenzusetzenden Teilen (1, 2, 3) abgesehen von den Führungsnuten (101) die Justiererhöhungen und -vertiefungen (110, 111, 212, 213; 210, 311, 312, 313) sowie Formzapfenhälften (130, 140, 230, 250, 340, 350) prismatische Körper sind, die achsparallel zusammensetzbar sind.

12. Element nach einem der vorhergehenden Ansprüche, dadurch gekennzeichnet, daß die Teile (1, 2, 3) mit ihren Führungsnuten, Justiererhöhungen und -vertiefungen sowie Formzapfenhälften mittels eines Präzisionsheißpreßverfahrens in Glas hergestellte Teile sind.

13. Element nach einem der Ansprüche 10 bis 12, dadurch gekennzeichnet, daß die zusammenzusetzenden Teile (1, 2, 3) aus einem quaderförmigen Basisteil (1), einem keilförmigen Teil (2) und einem Ergänzungsteil (3) bestehen, wobei Seitenflächen (21, 22) des keilförmigen Teils (2), welche die Keilspitze definieren, einen Keilwinkel ($\alpha$) einschließen, der höchstens 90° beträgt, wobei das Ergänzungsteil (3) zwei im Winkel zueinander stehende Seitenflächen (31, 32) aufweist, die einen Winkel von 180° abzüglich des Keilwinkels ($\alpha$) einschließen, wobei das keilförmige Teil (2) und das Ergänzungsteil (3) derart zusammengesetzt und miteinander verbunden sind, daß eine (22) der die Keilspitze definierenden Seitenflächen (21, 22) des keilförmigen Teils (2) und eine (32) der Seitenflächen (31, 32) des Ergänzungsteils (3) einander zugekehrt sind und einen oder mehrere senkrecht zu den parallelen Längsachsen dieser beiden Teile (2, 3) verlaufende Lichtwellenleiter (20) zwischen sich einschließen, während die übrigen (21, 31) der Seitenflächen (21, 22, 31, 32) des keilförmigen Teils (2) und des Ergänzungsteils (3) im wesentlichen in einer Ebene liegen und eine sogenannte Grundfläche (21 mit 31) bilden, wobei dieses aus dem keilförmigen Teil (2) und dem Ergänzungsteil (3) zusammengesetzte Teil mit dem Basisteil (1) derart zusammengesetzt und verbunden ist, daß die Grundfläche (21 mit 31) und eine parallel zu den parallelen Längsachsen der drei Teile (1, 2, 3) verlaufende Seitenflächen (11) des Basisteils (1), zwischen denen ein oder mehrere senkrecht zu den Längsachsen verlaufende Lichtwellenleiter (10) angeordnet sind, einander zugekehrt sind.

14. Element nach Anspruch 13, <u>dadurch gekennzeichnet</u>, daß die Grundfläche (21 mit 31) eine polierte Grundfläche ist.

15. Verfahren zur Herstellung eines Elements nach Anspruch 13, <u>dadurch gekennzeichnet</u>, daß der aus den drei prismatischen Teilen (1, 2, 3) zusammengesetzte Körper (K) parallel zu den Längsachsen dieser Teile (1, 2, 3) längs einer Schnittlinie (6) durchtrennt wird, welche die Spitze des keilförmigen Teils (2) tangiert und zur genannten Seitenfläche (11) des Basisteils (1) in einem Winkel von 90° abzüglich des halben Keilwinkels (α) des keilförmigen Teils (2) geneigt ist, daß nach einem Polieren der entstandenen Trennflächen (61, 62) auf den getrennten Teilen eine teildurchlässige Spiegelschicht (7) auf zumindest eine der Trennflächen (61, 62) aufgebracht wird, und daß die getrennten Teile wieder so zusammengesetzt werden, daß die Trennflächen (61, 62) sich gegenüberliegen und der oder die durchtrennten Lichtwellenleiter (10) wieder fluchten.

**Claims**

1. Distributor element for distributing light from at least one supply light guide to onward-transmitting light guides, which consists of two or more parts (1, 2, 3), adjacent parts with side faces turned towards one another adjoining one another areally, and one or more guide grooves for the accommodation of light guides (10, 20) being constructed on at least one side face, characterized in that the side faces turned towards one another (11, 21; 11, 31; 22, 32) of in each case two parts to be assembled (1, 2; 1, 3; 2, 3) have mating aligning prominances and aligning indentations (110, 210; 111, 311; 312 or 313) which enable self-alignment of the two parts to be assembled, and in that there are constructed on the other side faces (13, 23; 14, 34; 25, 35) of two parts to be assembled (1, 2; 1, 3; 2, 3), which jointly define an external face of the assembled body (K), two mould lug halves (130, 230; 140, 340; 250, 350) per guide groove, which, after the assembly of the two parts, form a cylindrical mould lug in which the light guide (10, 20) inserted into the associated guide groove (101) is arranged coaxially.

2. Element according to Claim 1, characterized in that of the side faces to be turned towards one another (11, 21; 11, 31; 22, 32) of two parts to be assembled (1, 2; 1, 3; 2, 3), between which one or more light guides (10, 20) are to be arranged, only one of these side faces has guide grooves (101) for the light guides.

3. Element according to Claim 1 or 2, characterized in that of the side faces to be turned towards one another (11, 21; 11, 31; 22, 32) of at least two parts to be assembled (1, 2; 1, 3; 2, 3) one of the side faces (11, 22) has only aligning prominances (110, 111; 212, 213), while the other side face (21, 31; 32) has only corresponding aligning indentations (210, 311, 312 or 313).

4. Element according to one of the preceding claims, characterized in that parts (1, 2, 3) are used of which the aligning prominances and indentations (110, 111; 212, 213 or 210, 311, 313) are of round construction.

5. Element according to one of the preceding claims, characterized in that parts (1, 2, 3) are used of which the aligning prominances and aligning indentations (110, 110, 212, 213; 210, 311, 312, 313) are constructed near the edges or corners of the parts.

6. Element according to one of the preceding claims, characterized in that at least two parts to be assembled (1, 2; 1, 3; 2, 3) are used in which the other side faces (13, 23; 14, 34; 25, 35), which define an external face of the assembled body (K), on which mould lug halves (130, 230; 140, 340; 250, 350) are constructed and which adjoin at an angle the side faces to be turned towards one another (11, 21; 11, 31; 22, 32) of these two parts at an angle, are arranged perpendicular to a guide groove (101) for light guides.

7. Element according to one of the preceding claims, characterized in that at least two parts to be assembled (1, 2; 1, 3; 2, 3) are used, in which the mould lug halves (130, 230; 140, 240; 250, 350) each have a plane side face, which lies in a plane with the adjoining face of the side faces to be turned towards one another (11, 21; 11, 31; 22, 32) of these two parts.

8. Element according to Claim 7, characterized in that on the plane side face a guide groove (101) constructed on the adjoining face (11, 22) of the side face to be turned towards one another (11, 21; 11, 31; 22, 32) extends as far as the free end of the mould lug half (130, 250).

9. Element according to Claim 7 or 8, characterized in that a mould lug half (130, 140; 230, 250, 340, 350) has an approximately semicircular cross-section.

10. Element according to one of the preceding claims, characterized in that the parts to be assembled (1, 2, 3) are integral precision-manufactured parts.

11. Element according to Claim 10, characterized in that, apart from the guide grooves (101), in the parts (1, 2, 3) to be assembled the aligning prominances and aligning indentations (110, 111, 212, 213; 210, 311, 312, 313) and the mould lug halves (130, 140, 230, 250, 350) are prismatic bodies, which can be assembled axially parallel.

12. Element according to one of the preceding claims, characterized in that the parts (1, 2, 3) with their guide grooves, aligning prominances and aligning indentations and mould lug halves are parts manufactured in glass by means of precision hot press moulding.

13. Element according to one of claims 10 to 12, characterized in that the parts to be assembled (1, 2, 3) consist of a cuboid base part (1), a wedge-shaped part (2) and a supplementary part (3), side faces (21, 22) of the wedge-shaped part (2) which define the wedge tip enclosing a wedge angle ($\alpha$), which amounts to 90° at most, the supplementary part (3) having two side faces (31, 32), which are angled to one another and enclose an angle of 180° minus the wedge angle ($\alpha$), the wedge-shaped part (2) and the supplementary part (3) being assembled and joined to one another in such a way that one (22) of the side faces (21, 22) of the wedge-shaped part (2) defining the wedge tip and one (32) of the side faces (31, 32) of the supplementary part (3) are turned towards one another, and enclosed between one another one or more light guides (20) extending perpendicular to the parallel longitudinal axes of these two parts (2, 3), while the remainder (21, 31) of the side faces (21, 22, 31, 32) of the wedge-shaped part (2) and of the supplementary part (3) lie essentially in a plane and form a so-called base face (21 with 31), this part assembled from the wedge-shaped part (2) and the supplementary part (3) being assembled with and joined to the base part (1) in such a way that the base face (21 with 31) and a side face (11) of the base part (1) extending parallel to the parallel longitudinal axes of the three parts (1, 2, 3), between which there are arranged one or more light guides (10) extending vertically to the longitudinal axes, are turned towards one another.

14. Element according to Claim 13, characterized in that the base face (21 with 31) is a polished base face.

15. Method of manufacturing an element according to claim 13, characterized in that the body (K) assembled from the three prismatic parts (1, 2, 3) is split along a line of section (6) parallel to the longitudinal axes of these parts (1, 2, 3), which line touches the tip of the wedge-shaped part (2) and is inclined to the named side face (11) of the base part (1) at an angle of 90° minus the half of the wedge angle ($\alpha$) of the wedge-shaped part (2), in that, after polishing of the resultant interfaces (61, 62), on the separated parts a partially transmitting specular cone (7) is applied to at least one of the interfaces (61, 62), and in that the separated parts are reassembled in such a way that the interfaces (61, 62) lie opposite one another, and the split light guide (10) or split light guides (10) are once again in line.

**Revendications**

1. Elément répartiteur servant à répartir une lumière provenant d'au moins un guide d'ondes optiques d'arrivée entre des guides d'ondes optiques de retransmission, et constitué par deux ou plusieurs parties (1, 2, 3), et dans lequel des surfaces latérales, qui se font face, de parties voisines sont contiguës sur une certaine étendue, et une ou plusieurs rainures de guidage servant à loger des guides d'ondes optiques (10, 20) sont ménagées dans au moins une surface latérale, caractérisé par le fait que les surfaces latérales (11, 21; 11, 31; 22, 32), qui se font face, de deux parties respectives (1, 2; 1, 3; 2, 3) devant être assemblées, comportent des bossages et des renfoncements d'ajustement (110, 210; 111, 311; 312 ou 313), qui s'adaptent les uns dans les autres et permettent un auto-ajustement des deux parties devant être assemblées, et que dans les autres surfaces latérales (13, 23; 14, 34; 25, 35) de deux parties (1, 2; 1, 3; 2, 3), qui doivent être assemblées et définissent en commun une surface extérieure du corps assemblé (K), se trouvent ménagées des rainures respectives de guidage de deux moitiés (130, 230; 140, 240; 250, 350) d'embout, qui forment, après assemblage des deux parties, un embout cylindrique, dans lequel le guide d'ondes optiques (10, 20), qui est inséré dans la rainure associée de guidage (101), est disposé coaxialement.

2. Elément suivant la revendication 1, caractérisé par le fait que parmi les surfaces latérales (11, 21; 11, 31; 22, 32), qui se font face, de deux parties (1, 2; 1, 3; 2, 3) qui doivent être assemblées et entre lesquelles un ou plusieurs guides d'ondes optiques (10, 20) doivent être disposés, seule l'une de ces surfaces comporte des rainures de guidage (101) pour les guides d'ondes optiques.

3. Elément suivant la revendication 1 ou 2, caractérisé par le fait que parmi les surfaces latérales (11, 21; 11, 31; 22, 32), qui se font face, d'au moins deux parties (1, 2; 1, 3; 2, 3) devant être assemblées, l'une des surfaces latérales (11, 22) comporte uniquement des bossages d'ajustement (110, 111; 212, 213), tandis que l'autre surface latérale (21, 31; 32) comporte uniquement des renfoncements correspondants d'ajustement (210, 311; 312 ou 313).

4. Elément suivant l'une des revendications précédentes, caractérisé par le fait qu'on utilise des parties (1, 2, 3), dont les bossages et les renfoncements d'ajustement (110, 111; 212, 213 ou 210, 311, 310, 313) possèdent une forme ronde.

5. Elément suivant l'une des revendications précédentes, caractérisé par le fait qu'on utilise des parties (1, 2, 3), dont les bossages et les renfoncements d'ajustement (110, 111; 112, 213; 210, 311, 312, 313) sont formés à proximité de bords ou d'angles des parties.

6. Elément suivant l'une des revendications précédentes, caractérisé par le fait qu'on utilise au moins deux parties (1, 2; 1, 3; 2, 3) devant être assemblées, dans lesquelles les autres surfaces latérales (13, 23; 14, 34; 25, 35), qui définissent une surface extérieure du corps (K) devant être assemblé et sur lesquelles sont prévues des moitiés (130, 230; 140, 340; 250, 350) d'embouts et qui se raccordent, sous un certain angle, aux surfaces latérales (11, 21; 11, 31; 22, 32), qui se font face, de ces deux parties, sont disposées perpendiculairement à une rainure de guidage (101) pour des guides d'ondes optiques.

7. Elément suivant l'une des revendications précédentes, caractérisé par le fait qu'on utilise au moins deux parties (1, 2; 1, 3; 2, 3), qui doivent être assemblées et dans lesquelles les moitiés (130, 230; 140, 240; 250, 350) d'embouts possèdent respectivement une surface latérale plane, qui est située dans le même plan que la surface contiguë faisant partie des surfaces latérales (11, 21; 11, 31; 22, 32) qui se font face.

8. Elément suivant la revendication 7, caractérisé par le fait qu'une rainure de guidage (101) située sur la surface contiguë (11, 22), qui fait partie des surfaces latérales (11, 21; 11, 31; 22, 32), qui se font face, s'étend, sur la surface latérale plane, jusqu'à l'extrémité libre des moitiés (130, 250) d'embouts.

9. Elément suivant la revendication 7 ou 8, caractérisé par le fait qu'une moitié (130, 140; 230, 250; 340, 350) d'embouts possède une section transversale approximativement semi-circulaire.

10. Elément suivant l'une des revendications précédentes, caractérisé par le fait que les parties (1, 2, 3) devant être assemblées sont des pièces d'un seul tenant, fabriquées de façon précise.

11. Elément suivant la revendication 10, caractérisé par le fait que dans les parties (1, 2, 3) devant être assemblées, indépendamment des rainures de guidage (101), les bossages et les renfoncements d'ajustement (110, 111, 212, 213; 210, 311, 312, 313) ainsi que les moitiés (130, 140, 230, 250, 340, 350) de l'embout sont des corps prismatiques, qui peuvent être assemblés, leurs axes étant parallèles.

12. Elément suivant l'une des revendications précédentes, caractérisé par le fait que les parties (1, 2, 3), munis de leurs rainures de guidage, leurs bossages et renfoncements d'ajustement ainsi que leurs moitiés d'embouts, sont des pièces en verre fabriquées selon un procédé de moulage de précision par compression.

13. Elément suivant l'une des revendications 10 à 12, caractérisé par le fait que les parties (1, 2, 3) devant être assemblées sont constituées par une partie de base parallélépipédique (1), une partie en forme de coin (2) et une partie complémentaire (3), que les surfaces latérales (21, 22) de la partie en forme de coin (2) qui définissent l'arête du coin, font un angle (α) égal au maximum à 90°, que la partie complémentaire (3) possède deux surfaces latérales (31, 32), formant entre elles un angle de 180° moins l'angle (α) du coin, que la partie en forme de coin (2) et la partie complémentaire (3) sont assemblées et réunies l'une à l'autre de telle sorte que l'une (22) des surfaces latérales (21, 22), qui définissent l'arête du coin, de la partie en forme de coin (2) et l'une (32) des surfaces latérales (31, 32) de la partie complémentaire (3) se font face et enserrent entre elles un ou plusieurs guides d'ondes optiques (20), qui s'étendent perpendiculairement aux axes longitudinaux parallèles de ces deux parties (2, 3), tandis que les autres surfaces (21, 22), qui font partie des surfaces latérales (21, 22, 31, 32) de la partie en forme de coin (2) et de la partie complémentaire (3) sont situées sensiblement dans un plan et forment ce qu'on appelle une surface de base (21 avec 31), que cette partie, formée par assemblage de la partie en forme de coin (2) et de la partie complémentaire (3), est assemblée et réunie à la partie de base (1) de telle sorte que la surface de base (21 avec 31) et une des surfaces latérales (11) de la partie de base (1), qui sont parallèles aux axes longitudinaux parallèles des trois parties (1, 3) et entre lesquelles sont disposés un ou plusieurs guides d'ondes optiques (10), perpendiculaires aux axes longitudinaux, se font face.

14. Elément suivant la revendication 13, caractérisé par le fait que la surface de base (21 avec 31) est une surface de base polie.

15. Procédé pour fabriquer un élément suivant la revendication 13, caractérisé par le fait qu'on subdivise le corps (K) formé par l'assemblage des trois parties prismatiques (1, 2, 3) parallèlement aux axes longitudinaux de ces parties (1, 2, 3), le long d'une ligne de coupe (6), qui est tangente à l'arête de la partie en forme de coin (2) et est inclinée, par rapport à ladite surface latérale (11) de la partie de base (1), sous un angle de 90° moins la moitié de l'angle (α) du coin de la partie en forme de coin (2), après un polissage des surfaces de séparation obtenues (61, 62) sur les parties séparées, on dépose une couche réfléchissante partiellement transparente (7) sur au moins l'une des surfaces de séparation (61, 62), et qu'on assemble à nouveau les parties séparées de manière que les surfaces de séparation (61, 62) soient situées en vis-à-vis et que le ou les guides d'ondes optiques (10) séparés soient à nouveau alignés.

# F I G 1

# FIG 2

# FIG 3

F I G 4

F I G 5